# EUROPÄISCHE PATENTSCHRIFT

(11) **EP 1 848 622 B1**
(45) Veröffentlichungstag und Bekanntmachung des Hinweises auf die Patenterteilung: **05.04.2017**
(21) Anmeldenummer: 06705984.0
(22) Anmeldetag: 17.02.2006
(51) Int. Cl.: B62B 5/04, B62B 3/14

(54) **WEGFAHRSPERRE FÜR EINEN TRANSPORTWAGEN**
IMMOBILIZER FOR A TRANSPORT TROLLEY
DISPOSITIF D'IMMOBILISATION POUR UN VEHICULE DE TRANSPORT

(30) Priorität: 18.02.2005 DE 202005002710 U; 18.02.2005 DE 202005002711 U; 18.02.2005 DE 202005002713 U; 18.02.2005 DE 202005002714 U; 26.09.2005 DE 202005015212 U; 05.10.2005 DE 202005015689 U
(43) Veröffentlichungstag der Anmeldung: 31.10.2007
(73) Patentinhaber: Filosi, Andreas, 82178 Puchheim (DE); Wieth, Franz, 82178 Puchheim (DE)
(72) Erfinder: Sonnendorfer, Horst, Deceased (DE); Wieth, Franz, 82178 Puchheim (DE)
(74) Vertreter: Braun-Dullaeus, Karl-Ulrich
(86) Internationale Anmeldenummer: PCT/DE2006/000299
(87) Internationale Veröffentlichungsnummer: WO 2006/086975

(56) Entgegenhaltungen:
- GB-A- 2 384 175
- US-A- 2 964 140
- US-A- 3 031 037

## Beschreibung

### Technisches Gebiet

Die Erfindung betrifft einen Transportwagen mit lenkbaren Rollen. Derartige Transportwagen werden von Einkaufsmärkten den Kunden für die Benutzung innerhalb eines zulässigen Bereichs zur Verfügung gestellt.

### Stand der Technik

Um zu verhindern, dass ein Transportwagen auch außerhalb dieses Bereiches verwendet werden kann kommen sogenannte Wegfahrsperren zum Einsatz. Bei bekannten Wegfahrsperren wird die Wegfahrsperre durch magnetische Kräfte aktiviert.

An der Grenze des zulässigen Bereichs befindet sich bodennah eine magnetische Zone. Beim Überfahren der magnetischen Zone wird durch magnetische Kräfte eine Mechanik betätigt, welche dann schließendlich die Wegfahrsperre aktiviert.

Bei den bekannten Wegfahrsperren ist es nötig, dass diese mit speziellen Werkzeugen und/oder Vorrichtungen wieder deaktiviert werden müssen.

Aus der Gattungsbildenden WO 97/37883 ist eine Wegfahrsperre bekannt, die im deaktivierten Zustand durch ein Magnetfeld aktivierbar ist.

### Offenbarung der Erfindung

### Technische Aufgabe

Es ist Aufgabe der Erfindung, das wechselweise Aktivieren und wieder Deaktivieren der Wegfahrsperre einfach, zuverlässig und kostengünstig zu realisieren, ohne dass spezielle Werkzeuge und/oder Vorrichtungen nötig sind.

### Technische Lösung

Die erfindungsgemäße Lösung sieht vor, dass
- durch die gleiche Mechanik, welche für die Aktivierung verwendet wird auch die Deaktivierung wieder vorgenommen wird,
- das Aktivieren und Deaktivieren der Wegfahrsperre durch das Überfahren einer magnetischen Zone erfolgt und
- die Bewegungsabläufe der Mechanik zum Aktivieren und Deaktivieren im wesentlichen gleich sind.

Die Mechanik der Wegfahrsperre verbleibt - nachdem sie durch ein temporär wirkendes Magnetfeld ausgelöst wurde - permanent im aktivierten, d.h. das Wegfahren des Transportwagen hindernden Zustand, bis ein erneutes, temporär auftretendes Magnetfeld einen neuen Bewegungsablauf in Gang setzt und daraufhin die Mechanik in den deaktivierten Zustand gelangt, und ein freies Bewegen des Transportwagens wieder möglich ist.

Es hat sich gezeigt, dass Kunden, wenn sie einen Einkaufswagen - der sich außerhalb des zulässigen Bereichs befindet und dessen Wegfahrsperre daher aktiviert ist - wieder zurück in den zulässigen Bereich bringen den Einkaufswagen oftmals einseitig anheben. Hierdurch wirken die von der magnetischen Zone ausgehenden Kräfte nur vermindert stark auf die Wegfahrsperre.

In einer Weiterbildung der Erfindung ist die Mechanik daher so ausgebildet, dass zum Deaktivieren der Wegfahrsperre ein geringeres Magnetfeld ausreicht als zum Aktivieren.

### Vorteilhafte Wirkungen

Durch die erfindungsgemäße Lösung, für das Aktivieren und Deaktivieren im wesentlichen die gleichen mechanischen Komponenten zu verwenden wird vorteilhaft die Anzahl der verwendeten Komponenten gering gehalten und durch die Tatsache, dass das Deaktivieren durch geringere Magnetfelder erfolgt als das Aktivieren ist vorteilhaft gewährleistet, dass die Wegfahrsperre an den Transportwagen, die mit aktivierten Wegfahrsperre zurück in den zulässigen Bereich gebracht werden zuverlässig wieder deaktiviert wird auch wenn der Einkaufswagen einseitig angehoben wird.

### Kurze Beschreibung der Zeichnungen

Nachfolgend ist die Erfindung anhand von 6 Figuren näher erläutert.

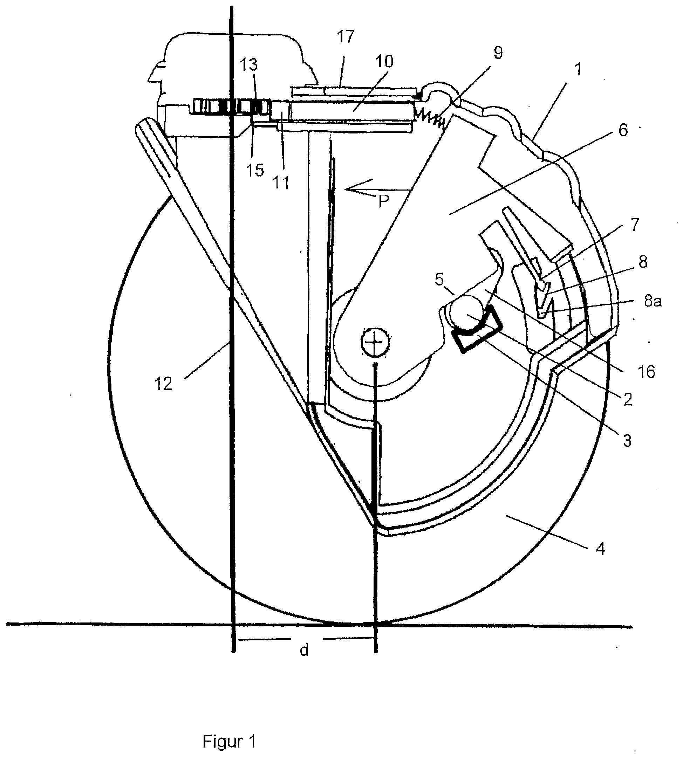

Die Figur 1 zeigt eine Wegfahrsperre 1 in aktiviertem Zustand.

Durch eine hier nicht gezeigte, durch magnetische Kräfte hervorgerufene Bewegung eines in dieser Darstellung nicht sichtbaren Hebels konnte die Kugel 2 aus einer Ausgangslage in die hier gezeigte Position rollen.

Durch einen Mitnehmer 3, der mit dem rollenden Rad 4 gekoppelt ist, wurde die Kugel 2 an eine Kante 5 der Wippe 6 gedrückt und hat diese Wippe 6 in Richtung des Pfeiles P bewegt.

Eine Haltenase 7 der Wippe 6 ist in einer Rastung 8 eingerastet und hält die Wippe 6 in der gezeigten Position.

Die Bewegung der Wippe 6 hat dazugeführt, dass die Feder 9 komprimiert wurde und einen Schlitten 10 bewegt. An dessen, der Feder 9 gegenüberliegenden Seite ist eine Verzahnung 11 vorhanden, die nun in Eingriff mit einer konzentrisch um die Lenkachse 12 angeordneten Verzahnung 13 gekommen ist.

Die Verzahnungen 11 und 13 sind so ausgelegt, dass die Verzahnung eine Veränderung des Lenkwinkels nur in einer Richtung erlaubt und dies auch nur solange, bis ein Endanschlag 15 in Kontakt mit dem Schlitten 10 kommt.

Ab diesem Zeitpunkt ist der Lenkwinkel in einer schrägen Position fixiert.

Die Verzahnungen 11 und 13 wirken wie eine Ratsche zusammen und bei zunehmender Änderung des Lenkwinkels wird der Schlitten 10 etwas zurück in Richtung der Feder 7 geschoben, um dann wieder in Richtung der Verzahnung 13 in nächste Verzahnung zu rasten.

Aufgrund des Abstandes d zwischen Lenkachse und Aufstandsfläche des Rades 4 ergibt sich ein Hebel. Die zur oben beschriebenen Ratschenbewegung erforderliche Kraft entsteht wenn sich der Lenkwinkel aufgrund einer gewollten oder ungewollten Richtungsänderung des Transportwagens ebenfalls ändert.

Die Kugel 2 wurde, nachdem sie die Wippe 6 in die gezeigte Position gebracht hatte von dem Mitnehmer 3 durch den Kanal 16 hindurch wieder in die Ausgangslage gebracht.

In dieser Ausgangslage verbleibt die Kugel 2 dann solange, bis der oben erwähnte Hebel erneut durch magnetisch hervorgerufene Kräfte bewegt wurde und es dadurch der Kugel 2 möglich war wieder in die Position zu rollen, in welcher sie vom Mitnehmer 3 ergriffen werden kann.

Sobald die Kugel 2 von dem mit dem Rad 4 gekoppelten Mitnehmer 3 erfasst wird, drückt sie erneut gegen die Kante 5 der Wippe 6 und bewegt diese in Richtung Pfeil P.

Die Haltenase 7 schnappt hierdurch aus der Rastung 8. Die Kugel 2 wird durch den Kanal hindurch wieder in die Ausgangslage gebracht.

Die Ausgestaltung von Haltenase 7 und Rastung 8 ist so gewählt, dass nun die Wippe 6 soweit entgegen der Richtung von Pfeil P schwenkt, bis die Haltenase 7 in einer Rastung 8a Halt findet.

Durch dieses Verschwenken wird auch der Schlitten 10 zurückgezogen und die Verzahnungen 11 und 13 befinden sich nicht mehr im gegenseitigen Eingriff. Das Rad 4 ist wieder frei um die Lenkachse 12 drehbar, die Wegfahrsperre ist deaktiviert.

Im Gehäuse der Wegfahrsperre 1 befindet sich ein Sichtfenster S. Durch dieses Sichtfenster hindurch kann man feststellen, ob sich der Schlitten in einer Position befindet, in der die Verzahnungen 11 und 13 in gegenseitigem Eingriff stehen.

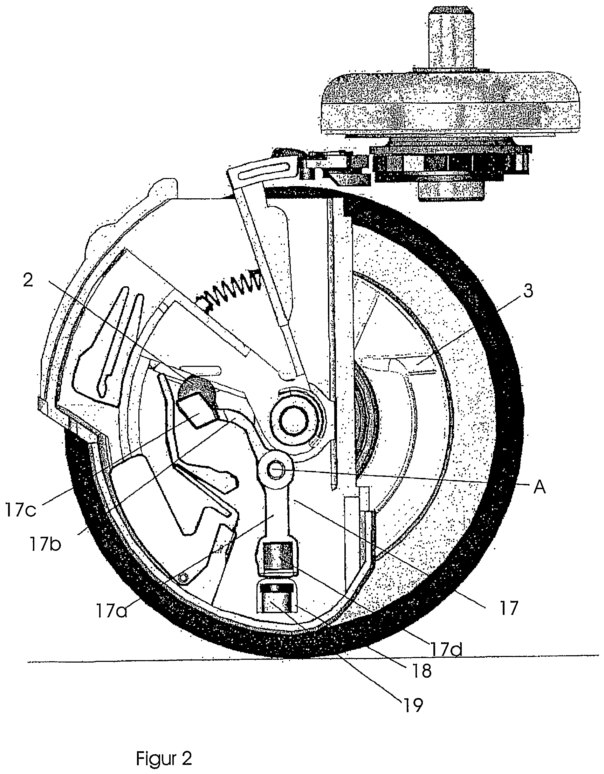

Die Figur 2 zeigt die aus Figur 1 bekannte Wegfahrsperre von der gegenüberliegenden Seite. Die zwei bewegliche Hebel 17 und 18 sind zwei Auslöseelemente.

In dieser Ansicht ist der durch magnetische Kräfte bewegbare Hebel 17 deutlich sichtbar. Der Hebel 17 ist drehbar um eine Achse A und umfasst einen Hebelarm 17a und 17b. Am Ende des Hebelarms 17b befindet sich eine Sperre 17c, welche die Kugel 2 daran hindert in den Kanal 16 zu rollen. Am Ende des Hebelarms 17a befindet sich ein Eisenteil 17d.

Über eine nicht gezeigte Verzahnung steht ein weiterer Hebel 18 mit dem Hebel 17 in Wirkverbindung. Der Hebel 18 befindet sich in dieser Ansicht hauptsächlich hinter dem Hebel 17 lediglich ein am Ende des Hebels 18 angebrachter Magnet 19 ist sichtbar.

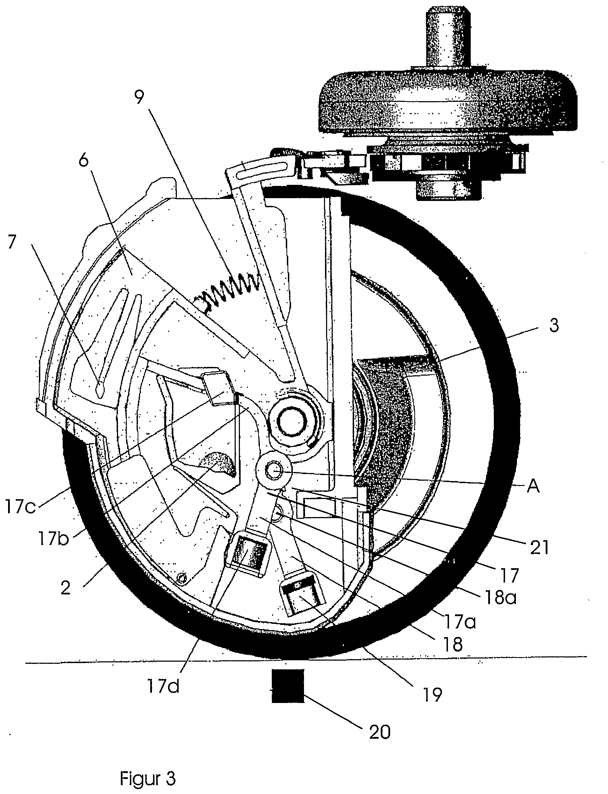

Die Figur 3 zeigt die Wegfahrsperre, wenn sie sich im Einflussbereich eines in der Fahrbahn eingelassenen Magneten 20 befindet.

Der Magnet 20 übt auf den Magneten 19 eine Kraft aus, die dazu führt, dass sich der Hebel 18 um die Achse 18a dreht. Über die Verzahnung 21 wird der Hebel 17 ebenfalls geschwenkt. Die Sperre 17c gibt die Kugel 2 frei, die dann in den Kanal 16 rollt.

Wenn sich das Rad weiter dreht, wird - wie bei der Figur 1 bereits ausführlich beschrieben- durch die Kugel 2 und durch den Mitnehmer 3 die Wippe 6 bewegt.

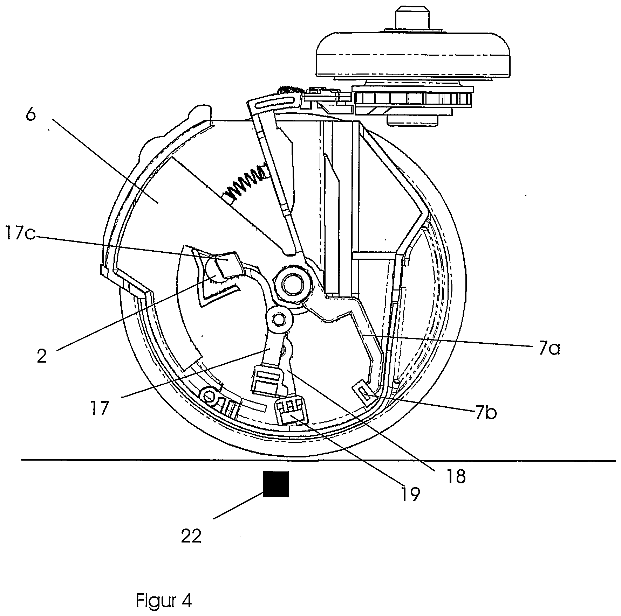

Die Figur 4 zeigt eine Weiterbildung der Erfindung. Die Wegfahrsperre befindet sich im deaktivierten Zustand und ist gerade in den Einflussbereich des Magneten 22 gekommen. An der Wippe 7 befindet sich ein Hebel 7a, an dessen Ende ein Magnet 7b befestigt ist.

Der Magnet 22 hat ein schwächeres Magnetfeld als der aus der Figur 3 bekannte Magnet 20. Die Kraft des schwächeren Magneten 22 erzeugt lediglich eine geringe Wirkung auf den Magneten 19 und daraus lediglich eine leichte Auslenkung der Hebel 17 und 18, die Sperre 17 c gibt die Kugel 2 daher nicht frei.

Der Magnet 7b ist so weit vom Magneten 19 entfernt, dass keine Kräfte entstehen, welche ein stärkeres Schwenken der Hebel 17 und 18 bewirken.

Wenn die Wegfahrsperre den Magneten 22 passiert ändert sich nichts am Zustand der Wegfahrsperre.

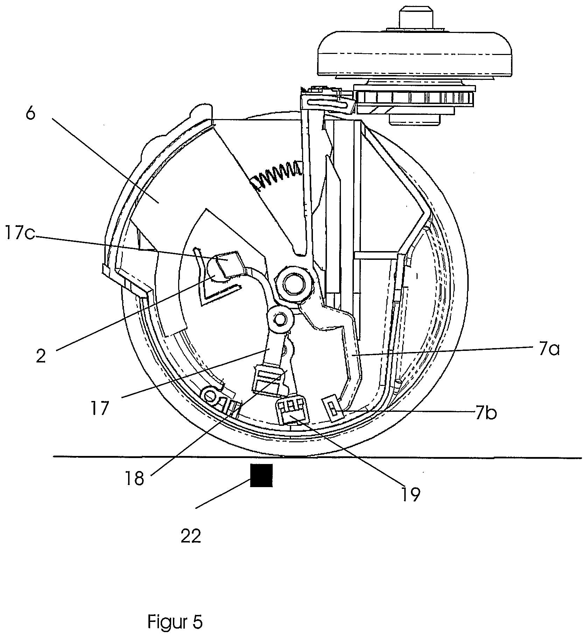

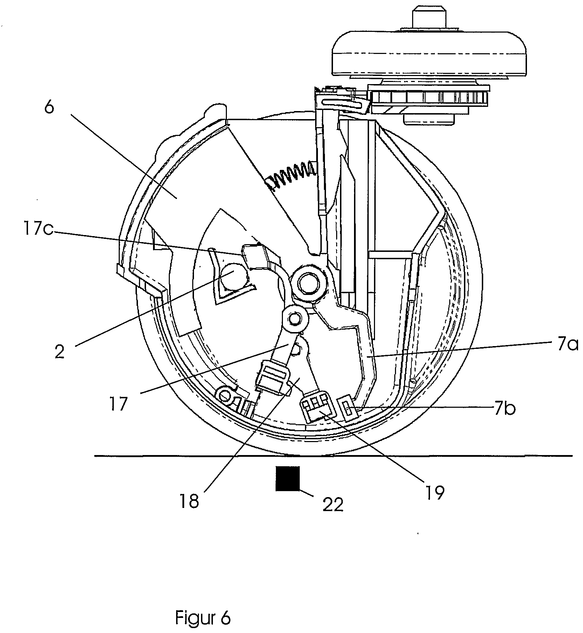

Die Figuren 5 und 6 zeigen die aus Figur 4 bekannte Weiterbildung der Wegfahrsperre im aktivierten Zustand.

Im aktivierten Zustand der Wegfahrsperre befindet sich der Magnet 7b an einer anderen Position innerhalb der Wegfahrsperre.

Durch den Magneten 22 wird wiederum nur eine leichte Auslenkung der Hebel 17 und 18 erzeugt, der Magnet 7b ist jedoch so nahe am Magneten 19, dass der Magnet 19 weiter bewegt wird.

Hierdurch ergibt sich eine so starke Auslenkung der Hebel 17 und 18, dass die Sperre 17 c die Kugel 2 freigibt.

Die Eigenschaft der erfindungsgemäßen Wegfahrsperre auf ein schwächeres Magnetfeld selektiv mit einer Deaktivierung zu reagieren kann in verschiedener Weise vorteilhaft ausgenutzt werden.

So ist es möglich, innerhalb des zulässigen Bereichs magnetische Zonen mit geringer Intensität anzubringen, bei deren Überfahren eine Wegfahrsperre, die noch aktiviert ist deaktiviert wird.

Eine solche magnetische Zone geringer Intensität ist beispielsweise vorteilhaft im Bereich der Sammelstellen von Einkaufswagen anzuordnen, um sicherzustellen, dass alle Einkaufswagen die der Sammelstelle entnommen werden diese Zone passieren und somit eine eventuell noch aktivierte Wegfahrsperre deaktiviert wird.

Wenn eine solche schwach magnetische Zone innerhalb des zulässigen Bereichs aber in relativer Nähe zu der Zone mit starkem magnetischem Feld liegt, welche die Grenze zum unzulässigen Bereich markiert, dann kann man mit dieser schwachen Zone die Wegfahrsperren derjenigen Transportwagen, welche aus dem unzulässigen Bereich zurück in den zulässigen Bereich gebracht werden noch zuverlässiger deaktivieren:

Durch die stark magnetische Zone werden grundsätzlich alle aktivierten Wegfahrsperren deaktiviert. Wenn dann aber aus irgend einem Grund eine der Wegfahrsperren nach dem Passieren der stark magnetischen Zone doch noch nicht deaktiviert sein sollte, so erfolgt deren Deaktivierung beim Überfahren der schwach magnetischen Zone.

Da eine aktivierte Wegfahrsperre durch ein schwächeres Magnetfeld deaktiviert werden kann, wird die Wegfahrsperre oft auch dann deaktiviert, wenn ein von Außen zurückgebrachter, einseitig angehobener Einkaufswagen die Grenze zum zulässigen Bereich und somit die Zone mit starkem magnetischen Feld passiert.

## Patentansprüche

1. Anordnung, umfassend eine bodennahe magnetische Zone und eine Wegfahrsperre, wobei ein von außen auf die Wegfahrsperre (1) einwirkendes Magnetfeld Kräfte auf Betätigungselemente (2,3,5,6) im Inneren der Wegfahrsperre (1) ausübt, wobei die von diesem Magnetfeld hervorgerufenen Kräfte bei einer deaktivierten Wegfahrsperre (1) bewirken, dass die Wegfahrsperre (1) den aktivierten Zustand einnimmt,
**dadurch gekennzeichnet,**
- **dass** von diesem Magnetfeld hervorgerufene Kräfte bei einer aktivierten Wegfahrsperre (1) bewirken, dass die Wegfahrsperre (1) den deaktivierten Zustand einnimmt,
- **dass** bewegliche Auslöseelemente (17,18) vorgesehen sind, welche durch die von diesem Magnetfeld hervorgerufenen Kräfte in eine Auslöseposition bewegbar sind
- **dass** mechanische Betätigungselemente (2,3,5,6) vorgesehen sind, welche mit dem Auslöseelement zusammenwirken,
- **dass** durch die gleichen mechanischen Betätigungselemente (2,3,5,6) wechselweise die Aktivierung und auch die Deaktivierung der Wegfahrsperre (1) vornehmbar ist,
- **dass** die Bewegungsabläufe des Auslöse Elements und der mechanischen Betätigungselemente (2,3,5,6) zum Aktivieren und Deaktivieren der Wegfahrsperre (1) im Wesentlichen gleich sind,
- **dass** eine Halte-Mechanik (7,8) vorgesehen ist, die durch die Betätigungselemente (2,3,5,6) in einen aktivierten Zustand versetzbar ist und im aktivierten Zustand in einer ersten Position verbleibt und
- **dass** die Halte-Mechanik (7.8) bei erneutem Einwirken der Betätigung durch die Betätigungselemente (2,3,5,6) deaktivierbar ist und die Halte-Mechanik (7,8) im deaktivierten Zustand in einer zweiten Position verbleibt.

2. Wegfahrsperre nach Anspruch 1
**dadurch gekennzeichnet, dass**
die Wegfahrsperre so ausgebildet sind, dass im aktivierten Zustand der Wegfahrsperre ein von außen wirkendes Magnetfeld, welches geringer ist als das zum Aktivieren benötigte Magnetfeld ausreicht, um die Wegfahrsperre in den deaktivierten Zustand zu versetzen.

3. Wegfahrsperre nach Anspruch 2
**dadurch gekennzeichnet, dass**
die Wegfahrsperre einen Magneten (7b) enthält, der bei aktivierter Wegfahrsperre eine Position einnimmt, in welcher sein Magnetfeld auf die Auslöse Elemente (17,18) einwirkt und dieses Magnetfeld das von außen wirkende Magnetfeld dergestalt unterstützt, dass das Auslöse Element (17,18) die Auslöse Position einnimmt.

## Claims

1. Arrangement comprising a near-floor magnetic zone and an immobilizer, wherein a magnetic field acting on the immobilizer (1) from outside applies forces to actuating elements (2, 3, 5, 6) in the interior of the immobilizer (1), wherein in the case of a deactivated immobilizer (1), the forces caused by this magnetic field have the effect that the immobilizer (1) adopts the activated state,
**characterized in**
- **that** in the case of an activated immobilizer (1), forces caused by this magnetic field have the effect that the immobilizer (1) adopts the deactivated state,
- **that** movable initiation elements (17, 18) are provided which can be moved by the forces caused by this magnetic field into an initiating position,
- **that** mechanical actuating elements (2, 3, 5, 6) are provided which cooperate with the initiation element,
- **that** the activation and also the deactivation of the immobilizer (1) can be performed alternately by the same mechanical actuating elements (2, 3, 5, 6),
- **that** the movement sequences of the initiation elements and the mechanical actuating elements (2, 3, 5, 6) for activating and deactivating the immobilizer (1) are substantially the same,
- **that** a holding mechanism (7, 8) is provided which can be moved into an activated state by the actuating elements (2, 3, 5, 6) and remains in the activated state in a first position and
- **that** the holding mechanism (7, 8) can be deactivated by the actuating elements (2, 3, 5, 6) in the case of a renewed action of the actuation and the holding mechanism (7, 8) remains in the deactivated state in a second position.

2. The immobilizer according to claim 1,
**characterized in that**
the immobilizer is configured so that in the activated state of the immobilizer, an externally acting magnetic field which is smaller than the magnetic field required for activation is sufficient to move the immobilizer into the deactivated state.

3. The immobilizer according to claim 2,
**characterized in that**
the immobilizer contains a magnet (7b) which, when the immobilizer is activated, adopts a position in which its magnetic field acts on the initiation elements (17, 18) and this magnetic field assists the externally acting magnetic field in such a manner that the initiation element (17, 18) adopts the initiating position.

## Revendications

1. Agencement comportant une zone magnétique proche du sol et un dispositif d'immobilisation, un champ magnétique agissant par l'extérieur sur le dispositif d'immobilisation (1) exerçant des forces sur des éléments de manoeuvre (2, 3, 5, 6) à l'intérieur du dispositif d'immobilisation (1), lorsque le dispositif d'immobilisation (1) est désactivé, les forces provoquées par ledit champ magnétique ayant pour effet que le dispositif d'immobilisation (1) adopte l'état activé,
**caractérisé**
- **en ce que**, lorsque le dispositif d'immobilisation (1) est activé, des forces provoquées par ledit champ magnétique ont pour effet que le dispositif d'immobilisation (1) adopte l'état désactivé,
- **en ce que** des éléments de déclenchement (17, 18) mobiles sont prévus, lesquels sont mobiles dans une position de déclenchement par les forces provoquées par ledit champ magnétique,
- **en ce que** des éléments de manoeuvre (2, 3, 5, 6) mécaniques sont prévus, lesquels interagissent avec l'élément de déclenchement,
- **en ce que** par les mêmes éléments de manoeuvre (2, 3, 5, 6) mécaniques, il est possible de procéder en alternance à l'activation et également à la désactivation du dispositif d'immobilisation (1),
- **en ce que** les séquences de déplacement de l'élément de déclenchement et des éléments de manoeuvre (2, 3, 5, 6) mécaniques sont sensiblement identiques pour l'activation et la désactivation du dispositif d'immobilisation (1),
- **en ce qu'**il est prévu un mécanisme d'arrêt (7, 8) qui par les éléments de manoeuvre (2, 3, 5, 6) peut être amené dans un état activé et qui dans l'état activé reste dans une première position et
- **en ce que** lors d'une nouvelle action de la manoeuvre via les éléments de manoeuvre (2, 3, 5, 6), le mécanisme d'arrêt (7, 8) est désactivable et dans l'état désactivé, le mécanisme d'arrêt (7, 8) reste dans une deuxième position.

2. Dispositif d'immobilisation selon la revendication 1,
**caractérisé en ce que** le mécanisme d'immobilisation est conçu de telle sorte que dans l'état activé du dispositif d'immobilisation, un champ magnétique agissant par l'extérieur, lequel est plus faible que le champ magnétique nécessaire pour l'activation est suffisant pour amener le dispositif d'immobilisation dans l'état désactivé.

3. Dispositif d'immobilisation selon la revendication 2,
**caractérisé en ce que** le dispositif d'immobilisation contient un aimant (7b) qui lorsque le dispositif d'immobilisation est activé adopte une position dans laquelle son champ magnétique agit sur les éléments de déclenchement (17, 18) et ce champ magnétique assiste le champ magnétique agissant par l'extérieur de telle sorte que l'élément de déclenchement (17, 18) adopte la position de déclenchement.
